# EUROPEAN PATENT APPLICATION

(11) **EP 4 086 622 A1**
(43) Date of publication of application: **09.11.2022**
(21) Application number: 21172042.0
(22) Date of filing: 04.05.2021
(51) Int. Cl.: G01N 30/86, G01N 30/88

(54) **USING CHROMATOGRAM FEATURES TO IDENTIFY BIOLOGICAL CHANGES IN VOLATILE ORGANIC COMPOUND PATTERNS**

(71) Applicant: Koninklijke Philips N.V., 5656 AG Eindhoven (NL)
(72) Inventor: Nijsen, Tamara Mathea Elisabeth, 5656 AE Eindhoven (NL); Xu, Mengzhu, 5656 AE Eindhoven (NL); Long, Xi, 5656 Ae Eindhoven (NL); Wijnoltz, Anna Louise, 5656 AE Eindhoven (NL)
(74) Representative: Philips Intellectual Property & Standards

(57) **Abstract**

The present invention relates to methods for analyzing or classifying a sample based on its volatile organic compound content. Gas chromatography data is compared with reference gas chromatography data, the reference gas chromatography data being gas chromatography data from the same subject from a different time point, preferably from a different day, more preferably from an adjacent day, and/or the gas chromatography data from a reference subject, to characterize the volatile organic compound profile.

## Description

### Field of the invention

The invention relates to methods for analyzing or characterizing a sample based on its volatile organic compound content. Particularly the method uses GC-MS data, wherein preferably both features from the MS data and the GC data are used. The method has applications in among others diagnosing a disease, staging a disease, stratifying a disease, or monitoring disease progression or a treatment response in a subject.

### Background of the invention

The analysis of volatile organic compounds (VOCs) in biological specimens such as breath, urine, and feces has attracted a considerable amount of clinical interest. The investigation of VOCs, using a variety of analytical techniques, has shown a significant correlation between the pattern and concentration of VOCs and the occurrence of various diseases, such as for example asthma, COPD, cancer, diabetes, infections. This provides a potentially non-invasive means of diagnosis and monitoring of health and disease.

VOCs generally are produced by the subject's metabolism, but also the microbiome: the bacterial population in specific body areas. Multiple different populate a specific microbiome where they balance each other, which is referred to as 'symbiosis'. More and more diseases are becoming known to related shifts in microbiome symbiosis. Lung diseases are related to the lung microbiome and the gut microbiome has been linked to a large number of diseases. Since the produced metabolites can be directly linked to the bacterial population, the VOCs can be considered to be a fingerprint of the microbiome hence any shift will indicate a shift in the overall microbiome composition.

A high-end analytical technique to analyze VOC- mixtures is gas chromatography and mass spectrometry (GC-MS). In scientific research, this method is often used to analyze VOCs coming from biological samples such as breath, urine and feces. The advantage of this method is that it can be used to identify and analyze specific molecules. Conventional processing strategies for GC-MS data include baseline correction, feature detection, and retention time alignment before multivariate modelling.

For example, de Meij et al., Early Detection of Necrotizing Enterocolitis by Fecal Volatile Organic Compounds Analysis (The Journal of Pediatrics, Vol. 167, No. 3, September 2015, pages 562-567) describe a method for analyzing VOCs from fecal matter to detect necrotizing enterocolitis (NEC) in a premature infant. The analysis is based on an electronic nose, which can create a fingerprint of a VOC composition. The fingerprint is used to predict the likelihood that the infant from which the fecal matter is obtained has NEC. They observed that fecal VOC profiles of infants with NEC could be discriminated from controls, from 2-3 days predating onset of clinical symptoms.

Garner et al., 2009 Journal of Pediatric Gastroenterology and Nutrition, 49:559-565 describe a method for analyzing VOCs from fecal matter to detect necrotizing enterocolitis (NEC) in a premature infant. The method uses GC-MS separate VOCs that can be identified by MS and used for diagnosis.

In gas chromatography a mixture of compounds will be separated into the individual components: different compounds have different affinity to the column resulting in different retention times in the column. So, a chromatogram will visualize by the number of peaks how many different compounds are present in the mixture. The size of the peak will represent the relative number of molecules. For identification of the specific molecules GC is often used in tandem with methods that are able to identify individual molecules, like for instance mass spectrometry. In mass spectrometry molecules are bombarded with electrons and will separate into molecule fragments. The fragment pattern is unique for a molecule, so can be used to identify a specific molecule.

Usually data is compared between patient groups (disease and control). The results obtained from here can be extremely useful for diagnosis. However, comparing between samples over time, what would be needed for monitoring is less studied. VOC profiles from biological samples contain many molecules and the pattern is complex and dependent on many processes in the body.

By applying a quantitative analysis, the differences between two groups can be detected. However, obtaining high-quality samples has always been a challenge in clinical research. In addition, the measurement setup may involve some bias when measuring the samples. Therefore, how to normalize the data or eliminate the inconsistency between samples are challenges before quantitative analysis of VOCs.

### Summary of the invention

The invention is defined by the independent claims. The dependent claims define advantageous embodiments. The invention can be used in applications/software where GC-MS data is analyzed, or in devices with compact or micro GC measurements. Such a measurement could be implemented in healthcare applications but also in for example, agricultural applications.

### Brief description of the drawings

Fig. 1 depicts a schematic overview of exemplary features extracted from the GC-MS output and which may be used in the methods according to the invention.
Fig. 2 depicts an exemplary model according to the invention based on MS and GC features and a comparison in performance with a reference model according to the prior art based on MS features only. A reference model based on GC features only is further included. The model is run on an exemplary dataset consists of GC-MS measurements of 205 fecal samples of 88 infants (44 NEC and 44 not NEC). The model using both MS features and GC features showed an improved area under the curve (AUC) of 84%, and an accuracy of 77.7% in predictive classifying NEC and control (not NEC) patients.
Fig. 3 depicts a schematic overview of day-difference of features.
Fig. 4 depicts an example of the alignment strategy by dynamic time warping method, dashed lines indicate the matched point pairs.

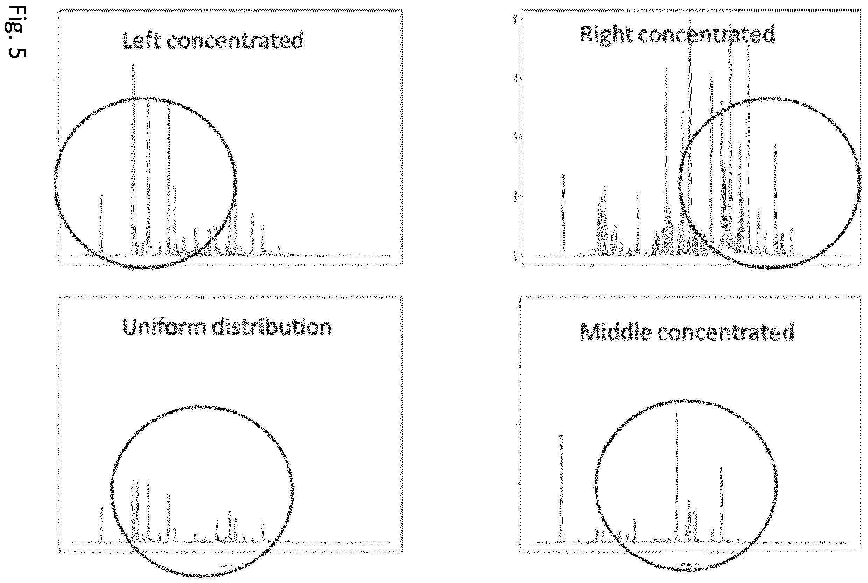

Fig. 5 depicts examples of VOC patterns with different distributions.

### Detailed description

Analysis and comparison of VOC profiles between samples has a variety of application including but not limited to diagnosis of patients. GC-MS methods have been used for analysis. Such analysis comprises performing GC on a VOC sample to separate different peaks which are subsequently analyzed using MS. The MS analysis results in peak information (based on the mass divided by the charge of the fragments). Optionally this MS analysis can be further used to identify compounds based on the peak information. Any predictions or comparisons are than based on either the peak information or the compounds identified therefrom. As far as the inventors are aware, in the prior art prediction or comparison models are solely based on MS data (see. e.g. de Garner et al., *supra*).

Although the mass spectrometry data is very suitable for these purposes, the methods are hampered by strong variability between samples, rendering it difficult to extract meaningful predictive features from the data. The present invention is based on the realization that the MS data can be supplemented with features extracted from the GC data. Particularly, features can be extracted from the GC dataset that complement an analysis based solely on MS data, such as number of peaks, and peak distribution over the spectrum. Clinical knowledge about physiological process is incorporated in the choice for these features. For example, in some pathologies of the gut it is known that the microbiome in the gut is changing, and in this way also the VOCs coming from feces will change since most of the VOCs are the metabolites of various bacterial processes.

As example here as a use case, prediction/detection of necrotizing enterocolitis (NEC) from fecal VOCs in neonates is chosen. It has been shown that NEC is considered as a devastating intestinal disease that disrupts the development of the gut microbiota: less species and less variety of species (reflected by VOC pattern). Therefore, we assumed that NEC infants have VOCs data (GC data) with lower complexity and less peaks (molecules) compared with control infants. Similarly, the VOC pattern of an NEC infant was expected to have an increased difference between two consecutive days due to the destruction of the intestinal microbiota system. In addition, as described previously, the chromatogram is defined by retention time representing the time that molecules spent to pass the column of GC. Longer retention time potentially indicates a relatively bigger and heavier molecule. NEC infants were expected to have less big and heavy molecules in fecal samples compared with control infants.

The features we describe in the next section are not limited to be used in VOCs coming from fecal samples, they can be derived from any GC pattern, irrespective if GC is coupled to another identification method like MS. Moreover, here we applied gas chromatography since we determined volatile molecules. In fact, any chromatography technique will yield similar results, so the described method may not exclude other separation techniques like liquid chromatography (LC), high pressure liquid chromatography (HPLC) and electrophoresis.

Therefore, in a first embodiment, the invention relates to a method for characterizing a volatile organic compound (VOC) profile in a sample based on assigning the VOC profile to a group selected from two or more different groups having different features, wherein the determining the VOC profile comprises: performing gas chromatography (GC) analysis on the VOCs present in the sample to extract GC data, and performing mass spectrometry (MS) analysis on the VOCs present in the sample to extract MS data; using the GC and MS data to construct GC and MS features using characteristics of the chromatogram; applying a model to the extracted MS and GC features to determine the probability that the VOC profile from which the GC and MS features are extracted belongs to each of the two or more groups, wherein said model has been independently built by putting features extracted from a reference or training dataset in a classifier using a classification method, combining the features and the classifier to form a model, and training the model with a labelled training dataset; wherein the MS features are MS peaks which differentiate with the different groups, and wherein the GC features are features describing the characteristics of the GC pattern that reflect metabolic or physiological processes and differentiate between the different groups, wherein characterizing the VOC profile is based on the assigned group.

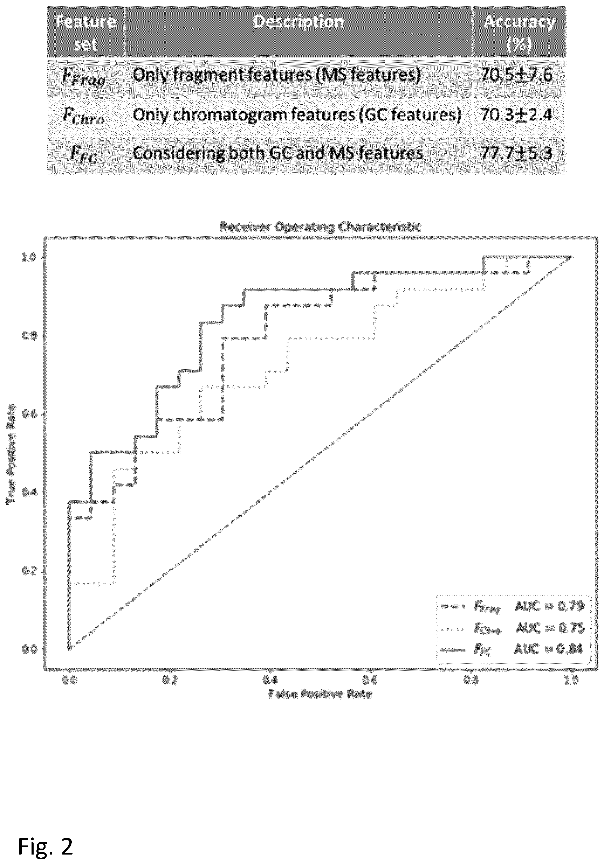

We propose system of novel features and machine learning algorithms for GC-MS and GC data analysis. These features are derived from the GC signal and capture typical characteristics of the GC pattern. These features enable comparison between groups but also overtime. Some of the features consist of a temporal element. It was found that VOC analysis based on MS data alone or GC features alone could significantly be improved by combining the two, as evidenced by the data represented in Figure 2. For the specific use case as depicted by Example 1, four different types of chromatogram features related to number of peaks, complexity of patterns, and intensity of different molecules across the spectrum and stability over time are proposed. These features are used, in combination of other existing features, by machine learning models to improve the prediction performance of a disease (e.g. NEC).

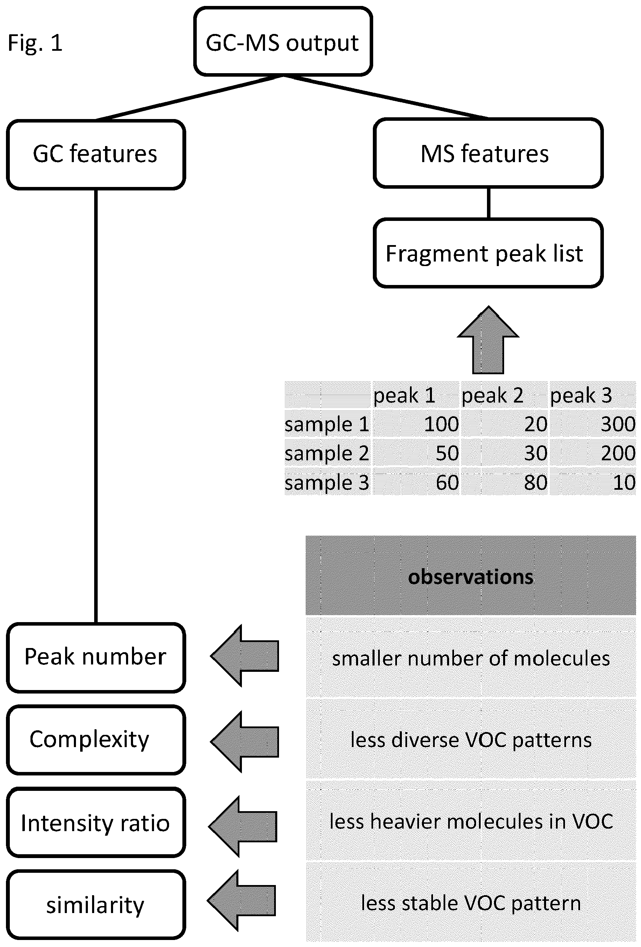

The invention thus describes a system that analyses data coming from a gas analysis device such as GC-MS and the data coming from this measurement is pre-processed and features are extracted. 2 types of features are extracted as also depicted in Figure 1:
1) features related to characteristics of the chromatogram (GC features); and 2) feature related to molecules (MS features). Then using machine learning techniques and training data, a model is built that can indicate whether a sample meets specific criteria by assigning it to a group representing the specific criteria or a group representing the absence of the specific criteria. In an example, the data is trained with GC-MS data coming from fecal samples from premature infants that are in the neonatal intensive care unit (NICU) and the system can give an indication whether there is a risk for NEC based on the analysis of the VOC data.

When used herein, the term volatile organic compound (VOC) is defined any organic compound having an initial boiling point less than or equal to 250 °C measured at a standard atmospheric pressure of 101.3 kPa. When used herein, the term VOC profile refers to VOCs found in a sample. The VOC profile may include information about the variety of compounds found in the sample and/or it may comprise information regarding their relative abundancies.

When used herein a sample refers to any sample comprising volatile organic compounds. The sample may be gaseous such as an air sample, liquid or solid. The sample may be a patient sample such as a fecal sample, a urine sample or a breath sample.

The method of the invention assigns the VOC profile to a group. The term group when used herein refers to a condition related to the hypothesis to be tested. For example, when using the method for diagnosing a disease, a group represents presence of the disease and a group represents absence of the disease. The method may also be more complex by assigning the VOC profile to one of more than two, e.g. three, four, five six or more, groups. The assigning is in essence based on calculating for the sample VOC profile probabilities for each group that it represents the observed VOC profile, and assigning the VOC profile to the group with the highest probability.

Gas chromatography-mass spectrometry (GC-MS) is an analytical method that combines the features of gas-chromatography and mass spectrometry to identify different substances within a test sample. The GC-MS is composed of two major building blocks: the gas chromatograph and the mass spectrometer. The gas chromatograph utilizes a capillary column whose properties regarding molecule separation depend on the column's dimensions (length, diameter, film thickness) as well as the phase properties (e.g. 5% phenyl polysiloxane). The difference in the chemical properties between different molecules in a mixture and their relative affinity for the stationary phase of the column will promote separation of the molecules as the sample travels the length of the column. The molecules are retained by the column and then elute (come off) from the column at different times (called the retention time), and this allows the mass spectrometer downstream to capture, ionize, accelerate, deflect, and detect the ionized molecules separately. The mass spectrometer does this by breaking each molecule into ionized fragments and detecting these fragments using their mass-to-charge ratio. These two components, used together, allow a much finer degree of substance identification than either unit used separately. It is not possible to make an accurate identification of a particular molecule by gas chromatography or mass spectrometry alone.

When used herein the term GC data refers to the raw data obtained from the chromatogram, meaning the spectrum of peaks. When used herein a GC feature refers to specific information contained in the GC data such as but not limited to number of peaks, complexity. The GC feature may have a temporal component and may for example refer to an increase or decrease of a subset of peaks overtime.

When used herein the term MS data refers the raw data obtained from mass-spectrometry, meaning the spectrum of mass over charge peaks. When used herein, the MS feature refers to specific information contained in the MS data such as but not limited to peaks with specific m/z values or compound that can be identified from the peaks.

In the method of the invention GC and MS features are extracted from the GC and MS data. The MS features are extracted by one or more peaks, or corresponding compounds, such that the one or more peaks can be used to distinguish between the two or more groups. For example, a peak may much more pronounce in one group compared to the other, or a peak may be absent in one group and present in the other. The feature may also refer to a combination of peaks, or to a compound identified from the peaks.

The GC features are extracted by comparing the GC chromatograms representing the two or more different groups and/or different time points to identify differences. The GC features may be extracted manually, meaning by manually comparing and identifying differences between the chromatograms. Alternatively, an algorithm can be used for extracting the GC features. Non limiting examples of features may be number of peaks, peak distribution, changes in peak intensity over time, etc. However, any information in the chromatogram that differs between the two or more groups can be used. Extracting the GC features may further be based on biological input. For example, the VOCs isolated from a fecal sample are mainly produced by the microbiome. Therefore, a condition that affects the microbiome may be assumed to have an effect on the VOCs. For example, a condition where microbiome diversity is reduced may be observed as a reduction of peaks in the GC data, as fewer unique volatile organic compounds are produced in the less diverse microbiome.

In an embodiment of the invention a model is applied to the extracted GC and MS features, to determine the probability that the VOC profile from which the GC and MS features are extracted belongs to each of the two or more groups, wherein said model has been independently built by putting features extracted from a reference dataset in a classifier using a classification method, combining the features and the classifier to form a model, and training the model with a labelled training dataset. It is understood that the model is built and trained independently. Once the model has been built for the specific purpose (e.g. for diagnosing a disease) it can simply by applied to the extracted features from the VOC profile of a sample. The model thus does not need to be constructed again each time; however, it is possible to improve the method by applying further training data.

For building the model, MS features and GC features, optionally supplemented with Patient information features are available for classification. The MS and GC features may both be composed of two parts, such as single-day feature and features from the differences between two consecutive days. To evaluate the classification performance of each feature set, and to understand whether the chromatogram features and day-difference features can improve the classification performance, different feature set combinations are used. A classifier, such as for example the logistic regression (LR) classifier may be employed as it is one of the most extensively used classification models in metabolomics data analysis. LR has the advantage that it is efficient and easy to interpret in particular when the dataset is small. However other classifiers such as k-nearest neighbors (KNN) and support vector machine (SVM) using the best-performed feature set may be used. All classification algorithms can be implemented using for example the scikit-learn package in Python programming software version 3.7.

A cross-validation method may further be adopted to evaluate the performance. For example, a 5-fold cross-validation was applied, meaning on each iteration of the cross-validation, four folds are used to train the classifier and the left fold was used to test the classifier. The classifier is then evaluated on each test set (fold), obtaining its performance for each iteration of the cross-validation. To check the stability of the model, the classifier multiple runs are run with different training data set arrangement, the results are pooled to have an indication of the overall performance of the classification. After that, a single run with classification performance similar to the pooled performance can be selected and reported. To evaluate the classifiers and the combinations of different type of features, several different criteria can be used, including the overall accuracy, the area under the receiver-operating-characteristic curve (AUC) and the confusion matrix.

Preferably the model is applied to the GC and MS features extracted from the VOC profile of a sample to calculate a probability for each of the two or more groups that the VOC profile corresponds to that group, and wherein the VOC profile of the sample is assumed to correspond to the group with the highest probability. For example, the two or more groups relate to reference samples obtained from subjects with a disease and healthy control subjects. From the reference sample two groups can be constructed, representing diseased and healthy. By comparing the sample VOC profile and calculating probabilities, it can be determined if the sample corresponds more to the diseased state or the healthy state. Based on these probabilities, a diagnosis could be made, i.e. the subject is diagnosed with the disease if the sample is more probably to correspond to the disease group.

Therefore, in another aspect the invention relates to a method for building a model, suitable for use in a method for characterizing a VOC profile in a sample, the method comprising putting features extracted from a reference dataset in a classifier using a classification method, combining the features and the classifier to form a model, and training the model with a labelled training dataset. Preferably the features are GC and MS features as defined herein.

When used herein the term MS peaks refers to the peaks when plotting the MS fragments mass over charge. The MS peaks contain information about the fragment size and charge, and contain information about the abundance (heigth of the peak).

It was found the a particularly useful application of the method is in diagnosing, staging or stratifying a disease, or for monitoring disease progression or the response to a treatment of a disease. Therefore, in an embodiment, the method is for diagnosing a disease, staging a disease, stratifying a disease or monitoring disease progression or a treatment response in a subject, wherein the diagnosing the disease, staging the disease, stratifying the disease or monitoring disease progression or the treatment response in the subject is based on the assigned group by relating the assigned group to a diagnosis, disease stage, stratification or treatment response. When used herein, the term staging a disease refers to the determination of distinct phases or periods in the course of a disease.

When used herein, the term diagnosing refers to identifying or recognizing a disease. When used herein, to stratify a disease refers to classifying a disease into categories. Non limiting examples of categories are risk or severeness of the disease. When used herein monitoring disease progression refers to following up on the progression of a disease through the different stages over time. When used herein monitoring a treatment response refers to following up on patient receiving a treatment to determine if the treatment is effective or not, meaning monitoring if symptoms are reducing over time or if the patient shows a VOC profile more associated over time with a normal or healthy subject. Alternatively, the monitoring can be used to monitor for adverse effects of the treatment, e.g. unwanted side effects or ineffectiveness of the treatment.

It is envisioned that fecal matter, urine, exhaled breath, blood, saliva, breast milk or sweat provide suitable samples for isolation of VOC that can be used in the methods described herein as volatile organic compounds can be detected in these samples, and used to distinguish between for example a and a disease state, as for example described in Costello et al., J. Breath Res. 8 (2014) 014001 (29pp). Therefore, in an embodiment, the sample is fecal matter, urine, exhaled breath, blood, saliva, breast milk or sweat obtained from the subject. In an embodiment the method further comprises providing fecal matter, urine, exhaled breath, blood, saliva, breast milk or sweat from the subject. In an embodiment the method further comprises pre-processing the fecal matter, urine, exhaled breath, blood, saliva, breast milk or sweat for VOC analysis. In an embodiment the pre-processing of the fecal matter comprises static headspace sampling. Methods for collecting fecal matter, urine, exhaled breath, blood, saliva, breast milk or sweat and isolating VOCs have been described and are known to the skilled person, see e.g. Woollam, M. et al. Sci Rep 9, 2526 (2019); J King et al 2010 Physiol. Meas. 31 1169; Garner et al., *supra*; de Meij et al., *supra.*

It is further envisioned that the method of the invention can be performed on a computing device or a device with a microprocessor, based on an input of the GC data and the MS data. Therefore, in a further aspect the invention relates to a computer implemented method for characterizing a volatile organic compound (VOC) profile in a sample based on assigning the VOC profile to a group selected from two or more different groups having different features, wherein the determining the VOC profile comprises: receiving mass spectrometry (MS) data obtained from the VOCs present in the sample; and receiving gas chromatography (GC) data obtained from the VOCs present in the sample, using the GC and MS data to construct GC and MS features using characteristics of the chromatogram; applying a model to the extracted MS and GC features to determine the probability that the VOC profile from which the GC and MS features are extracted belongs to each of the two or more groups, wherein said model has been independently built by putting features extracted from a reference or training dataset in a classifier using a classification method, combining the features and the classifier to form a model, and training the model with a labelled training dataset; wherein the GC features are features describing the characteristics of the GC pattern that reflect metabolic or physiological processes and differentiate between the different groups, wherein characterizing the VOC profile is based on the assigned group.

In an embodiment, the method is for diagnosing a disease, staging a disease, stratifying a disease or monitoring disease progression or a treatment response in a subject, wherein the diagnosing the disease, staging the disease, stratifying the disease or monitoring disease progression or the treatment response in the subject is based on the assigned group by relating the assigned group to a diagnosis, disease stage, stratification or treatment response.

Suitable classification methods are known to the skilled person. In an embodiment, the classification method is selected from a linear regression model, a logistic regression model, support vector machine, k-nearest neighbors, perceptron, linear discriminant analysis, naive Bayes, decision tree, random forest, AdaBoost or neural networks.

It is appreciated that the GC features suitable for use in the methods described herein may differ depending on the question to be answered. For example, it was found in Example 1 that for diagnosis of necrotic enterocolitis (NEC) the features peak numbers, complexity, intensity ration and similarity are predictive. These features may be more universally applicable or may be specific for NEC. Otherwise it is anticipated that for other predictions or diagnoses other features are found to be more predictive. Therefore, in an embodiment the GC features comprise at least one feature selected from peak numbers, complexity, intensity ration or similarity of the GC profile.

It is understood an important medical parameter is progression of a disease. Therefore, it may be beneficial to add a temporal element to the GC feature to obtain information about progression of the feature in time. Therefore, in an embodiment, the diagnosis, staging, stratification or monitoring is based on comparing the VOC profile in the fecal matter obtained from the subject at two different time points, preferably from two different days, more preferably from two consecutive days.

It is particularly envisioned that disease that affect a metabolic pathway may be diagnosed based on a breath or a urine sample and that disease that affect the microbiome can be diagnosed based on fecal matter as a sample, because it is envisioned that in such cases the VOC profiles are affected and thus contain information about the state of the subject. Therefore, in an embodiment, the disease to be diagnosed, staged, stratified or monitored is a disease that affects a metabolic pathway such that the differences can be observed in the VOC profile of the subject affected by the disease, preferably respiratory infection or lung cancer, or a disease that affects the microbiome, preferably necrotizing enterocolitis, sepsis, bowel disease, colon cancer or malnutrition. When used herein, a disease that affects a metabolic pathway may be a metabolic disease such as but not limited to Familial hypercholesterolemia, Gaucher disease, Hunter syndrome, Krabbe disease, Maple syrup urine disease, Metachromatic leukodystrophy, Mitochondrial encephalopathy, lactic acidosis, stroke-like episodes (MELAS), Niemann-Pick, Phenylketonuria (PKU), Porphyria, Tay-Sachs disease or Wilson's disease. Alternatively, the disease may be a disease that affects metabolic pathways but is in itself not classified as a metabolic disease, such as cancer or an infection.

The Example provides data on how necrotizing enterocolitis (NEC) can be diagnosed based on a fecal sample. Although a broader application of the technology is envisioned, in a particularly preferred embodiment the subject is a newborn suffering from or suspected to suffer from necrotizing enterocolitis (NEC), and the method is for diagnosing the subject with NEC, for staging the progression of NEC or for monitoring the disease progression or the treatment response to treatment of NEC in the subject. Not wishing to be bound be theory, it is theorized that NEC affects the microbiome and thus changes the VOC profile generated by the microbiome. Particularly it was theorized that deterioration of the gastrointestinal tract results in reduced microbiome diversity over time, resulting in a change of the VOC profile, particularly resulting in reduced peak number, reduced complexity, changed intensity ratio and similarity.

In an embodiment, the method further comprises preprocessing of the GC data, preferably wherein the pre-processing comprises peak detection and alignment.

In an embodiment, the GC feature peak numbers comprises comparing the number of peaks in the GC data obtained from the subject with the number of peaks observed in a reference sample obtained from a reference subject, or by comparing the number of peaks in the GC data obtained from the subject with the number of peaks observed in a sample obtained from the same subject at a different time point, wherein the peak numbers are counted after baseline noise removal.

In an embodiment, the GC feature complexity comprises comparing the entropy of the GC data obtained from the subject with the entropy of the GC data observed in a reference sample obtained from a reference subject, or by comparing the entropy in the GC data obtained from the subject with the entropy observed in a sample obtained from the same subject at a different time point, wherein the entropy is expressed as one selected from:
- the minimum number of bits needed to encode the data sequence;
- quantifying the complexity by measuring the probability that a new pattern is generated in the sequence;
- measuring the complexity of a data sequence in the spectrum domain.

In an embodiment, the GC feature intensity ratio comprises comparing the intensity ratio in the GC data obtained from the subject with the intensity observed in a reference sample obtained from a reference subject, or by comparing the intensity ratio in the GC data obtained from the subject with the intensity ratio observed in a sample obtained from the same subject at a different time point, wherein the chromatogram is divided in segments with different retention time ranges and computing for each segment the percentage of molecule number over the total molecule number of the entire retention time.

In an embodiment, the GC feature similarity comprises comparing the similarity in the GC data obtained from the subject with the intensity observed in a sample obtained from the same subject at a different time point, wherein similarity is determined using cosine similarity or dynamic time warping.

It shall be understood that the methods of the present invention have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### DETAILED DESCRIPTION OF THE EMBODIMENTS

The following example merely illustrates a particularly preferred application of the methods and selected aspects in connection therewith. The following example is not to be construed as limiting the scope of the present invention.

### Problem description and objective

Necrotizing enterocolitis is a severe gastrointestinal disease in preterm infants in the neonatal intensive care unit (NICU), with a reported incidence between 3% and 15%. It is an acute and life-threatening inflammatory disease. Of affected preterm infants, one-third may need surgery in case of gut necrosis or bowel perforation. The mortality rate in confirmed NEC patients remains higher than 15%. This number can be higher for babies with a very low birth weight and gut maturity. For survivors, different common irreversible lifelong complications may follow, such as neurocognitive impairment and short bowel syndrome.

Early diagnosis of NEC and initiation of therapy are of great importance for improved outcomes. Currently, NEC is often clinically suspected, and its diagnosis usually requires the help of diagnostic imaging modalities (most commonly radiography). Specific radiographic expressions of NEC are associated with certain stages of the disease. Diagnosis by radiography is only possible after the presence of necrotizing effects. Additionally, the diagnosis of NEC is difficult because of the concurrent signs and symptoms caused by other diseases such as sepsis.

Recently, an increasing number of studies have been carried out to explore biomarkers that can predict NEC for preterm infants before necrosis begins. For example, one study observed that abnormal bacterial colonization of the immature gut is a significant risk factor for NEC. However, in clinical practice, analysis of the microbiota as an early diagnostic biomarker is not feasible due to logistics and high costs.

In the past decades, many studies have shown the potential of volatile organic compounds (VOCs) to be used as a non-invasive diagnostic biomarker for various diseases, such as lung cancer and asthma. Studies have been done to investigate fecal VOCs as early indicators for NEC by inspecting the composition of the gut microbiota indirectly. Notably, from a medical point of view, VOCs emitted from feces represent the end product of digestive system activity and metabolism which can be used to diagnose intestinal disease. The research by Meij et al. observed that infants with NEC have different fecal VOC patterns compared with matched control preterm infants from 2-3 days predating the onset of clinical symptoms by means of electronic nose (eNose) analysis. The methodology of that study was not able to identify the differences in specific molecules or VOC patterns between NEC and control preterm infants. However, these differences promising to improve clinical management and help understand the pathogenesis of NEC.

To potentially identify differences in VOC patterns between control and NEC preterm infants, the fecal samples of study were analyzed by gas chromatography-mass spectrometry (GC-MS), an analytical technique that identifies different substances in the gas phase within a test sample. In order to predict NEC, features quantifying GC-MS measurements should be extracted, including MS features and GC features. These features can be fed into a machine-learning algorithm to train a predictive classification model. In this study, a series of steps were performed to study the feasibility of the NEC prediction by fecal VOCs, including data preprocessing steps, feature extraction, feature selection, statistical analysis, and classification model building.

The primary objectives of this study were to find informative features from VOC patterns and molecules (measured by GC-MS) that are predictive for NEC and to evaluate the feasibility of machine-learning models to predict NEC using these features.

### Method: data

### Participants and samples

Data of this study were collected from 88 preterm infants in the NICUs in the Netherlands and Belgium between October 2014 and January 2017. Preterm babies born with a gestational age of ≤ 33 weeks were qualified to participate in this study. The fecal samples of the included infants were collected prospectively during the first 31 days of their life. After collecting the feces in the stool container, the samples were stored at a temperature of -20 °C until it was measured.

Infants were allocated to the NEC group if two experts confirmed the criteria for a modified Bell's stage ≥ IIA independently (e.g. severity of NEC stages are IIA < IIB < IIIA < IIIB). A detailed description of NEC stages can be found in Gregory et al., Adv Neonatal Care, vol. 11, no. 3, pp. 155-166, 2011. To study the VOC pattern differences between preterm infants with or without NEC, for each NEC preterm infant, there was a matched control preterm infant with a similar gestational age, birth weight, postnatal age, and a same feeding method and center of birth, but no NEC clinical symptoms developed.

In this study, for each pair of matched infants, we collected samples of NEC infant for three consecutive days prior to onset, and the samples of matched control infant during these three days (denoted as t 3, t 2, and t 1). There were missing data (samples) because infants sometimes did not produce any stool. In total, 205 fecal samples from the 88 preterm infants were collected in this work, as shown in Table 1.

**Table 1 Summary of collected fecal samples from 88 preterm infants in different days**

| **Day** | **NEC** | | | | **Control** |
|---|---|---|---|---|---|
| | **IIA** | **IIB** | **IIIA** | **IIIB** | |
| **t₋₁** | 14 | 11 | 6 | 8 | 38 |
| **t₋₂** | 10 | 9 | 6 | 8 | 33 |
| **t₋₃** | 11 | 9 | 6 | 6 | 30 |
| **Total** | **35** | **29** | **18** | **22** | **101** |
| | **104** | | | | |

### Headspace VOCs Analysis

For sample preparation, the static headspace (SHS) sampling method was applied to extract VOCs from fecal samples. The same number of samples were put into 10 ml sealed vials. The standard sample weight designed was 100 mg. If the weight of the sample is less than 100 mg, then we took out all available amounts. A volume of 1.25 ml of water with a certain amount of internal standard (ISTD) liquid was added and the samples were homogenized in an ultrasonic bath for 90 min to speed up sample dissolution and diffusion. Afterwards, the vials were incubated at 125°C for 30 min, so that different VOCs were vaporized. SHS established an equilibrium between the solvent and gas (headspace) phase above it in the vial. A 1.65g salt, lithium chloride, was added in the beginning to shift the equilibrium to urge more VOCs moved out from water phase into headspace. For each sample, a multimode injector extracted 1.5 ml gas from the headspace of the vial. VOC pattern of the sample can be obtained from the extracted gas. The potential limitation of the SHS method is that it is not sensitive to heavy molecules in the fecal sample that is more likely to remain in the liquid phase. The article "Optimized sample preparation for fecal volatile organic compound analysis by gas chromatography-mass spectrometry" by El Manouni el Hassani et al, Metabolomics (2020) 16:112 describes useful techniques.

### GC-MS Analysis

GC-MS is an analytical technique that combines gas chromatography and mass spectrometry to discriminate between different substances within a sample. The injected gas sample was propelled by an inert carrier gas (Helium) to go through a capillary column. The chemical differences between the molecules in the sample and their relative affinity to the column will separate the molecules as they pass through the column. The time of molecules spent to pass the column is called the retention time (rt). Once the molecules leave the chromatography column, the mass spectrometer breaks each molecule into ionized fragments, which will be detected and recorded by their mass-to-charge ratio (m/z). The m/z composition and their relative abundance (intensity) are able to retrieve which molecule it belongs to. An exemplary GC-MS raw data file, read by the automated mass spectral deconvolution and identification system (AMDIS) shows at the top of the schematic a gas chromatogram (GC data) showing the retention time and abundance of different molecules. The ionized fragments composition at a certain retention time (11.28 min in the figure) can be reviewed by looking at the bottom mass spectrum (MS data) defined by m/z and their corresponding relative abundance.

### Data Preprocessing

The measured GC-MS data were processed by the method described by Smith et al. Anal. Chem, vol. 78, no. 3, pp. 779-787, 2006 in the R-package XCMS and it is currently a widely used pre-processing tool in the metabolomics analysis. The peak detection and alignment were executed following the description by Smith et al. The integrated concentration of different m/z ratio fragments by different retention time was put into a peak table for each fecal sample. For those fragments that appear in at least 40% of the samples were used to form the fragments' peak table. The reason that we worked with the fragments rather than the molecules is that there are currently no tools available to automatically transform the fragment table into a molecule table, and this work may take dozens of days for a chemical expert to complete. In theory, quantitative analysis of fragments is equivalent to the analysis of molecules, but with some redundant collinearity information (i.e. one molecule is broken down into several ionized fragments). In general, there were 1353 different fragments for each sample.

To compensate for small drifts in GC-MS output, the amplitude of the fragment was required to be normalized by ISTD measured for each sample. Since ISTD can be influenced by the content in the fecal samples, the ISTD values in the quality control (QC) samples (the vials with only the ISTD solvent) at the start and end of each measurement batch were used for drift compensation. A linear relationship was assumed between the start and end measurements of each batch. In this study, fecal samples were organized to be measured in 7 measurement days. For each measurement day, the samples were divided into several batches, each batch contains ten samples. The GC-MS data measured in different batches of different measurement days were normalized by interpolated values between the ISTD values measured in the QC samples.

### Data selection

As mentioned, this study was inspired by the hypothesis that NEC has an effect on the VOC patterns extracted from fecal samples of preterm infants. However, the exact impact of time in the sample is still unknown. Therefore, we included the samples on three consecutive days prior to onset (i.e. t-3, t-2, and t-1), where fragment features can be obtained from these days. Due to the missing fragment data, we only considered the patients with data from all the three days, leading to a total of 47 infants (including 23 NEC infants and the corresponding 23 matched controls as well as 1 NEC infant without a matched control infant).

### Method: features

### Feature Extraction

The goal of feature extraction was to characterize a set of variables (called "features") from the dataset which were expected to predict NEC. In this study, features are considered from four different sources.
1) Patient Features: Patient and sample information was recorded, which contains the characteristics of the participants and the samples, including patient gender, age, and birth weight, single/multiple births and center of birth as well as sample weight and color.
2) Fragment Features: The measurement output of MS data was organized into a fragments peak table that describes the abundance of detected fragments. There were 1353 different fragments per day resulting in 1353 fragment features. The fragment features indicate the abundance of different substances detected in the fecal sample.
3) Chromatogram Features: Features extracted from GC data are considered as more comprehensive features compared with MS features. We proposed four different types of chromatogram features in this study as described below.

It has been shown that NEC is considered as a devastating intestinal disease that disrupts the development of the gut microbiota (reflected by VOC pattern), see N. Cassir, U. Simeoni and B. L. Scola, "Gut microbiota and the pathogenesis of necrotizing enterocolitis in preterm neonates," FUTURE MICROBIOLOGY, vol. 11, no. 2, 2016. Therefore, we assumed that NEC infants have VOCs data (GC data) with lower complexity and less peaks (molecules) compared with control infants. Similarly, the VOC pattern of an NEC infant was expected to have an increased difference between two consecutive days due to the destruction of the intestinal microbiota system. In addition, as described previously, the chromatogram is defined by retention time representing the time that molecules spent to pass the column of GC. Longer retention time potentially indicates a relatively bigger and heavier molecule. NEC infants were expected to have less big and heavy molecules in fecal samples compared with control infants. 3.1) Peak number feature: The peak number of VOC pattern was counted after the baseline noise removal of the chromatogram. This feature indicates the number of different molecules detected in VOC patterns. 3.2) Entropy features: The complexity or unpredictability of a signal refers to how difficult it can be expressed [Obin and Liuni, "On the generalization of Shannon entropy for speech recognition," in IEEE Spoken Language Technology Workshop (SLT), Miami, FL, USA, 2012]. Entropy is the most well-known measure of complexity. Here, the entropy of the chromatogram can be used as a feature to quantify the complexity of VOCs data. Three entropy measures were considered.
First, we employed differential entropy (DiffEn) to quantify the complexity by calculating the average minimum number of bits needed to encode a data sequence [Cover and Thomas, Elements of Information Theory, New York: Wiley series in telecommunications, 1938].

Second, we used sample entropy (SampEn) that quantifies the unpredictability of a data sequence by measuring the probability of generating a new pattern in the sequence. The greater the probability of the new pattern, the larger the complexity of the sequence [Richman and Moorman, American Journal of Physiology, vol. 278, no. 6, pp. H2039-H2049, 2000.].
Third, spectral entropy (SpectralEn) was used, which measures the complexity of a data sequence in the spectrum domain.
3.3) Intensity ratio features: As described above, NEC infants were assumed to have fewer big and heavy molecules. Therefore, we divided the chromatogram data (intensity versus retention time) into 4 segments (i.e. 450-650s, 650-850s, 850-1050s, and 1050-1250s). In each session, we computed the percentage of molecule number over the total molecule number of the entire retention time. (i.e. segment 1 ratio, segment 2 ratio, segment 3 ratio, segment 4 ratio)
3.4) Day-difference Features: To study the VOCs differences over consecutive days between NEC and control infants, we extracted the day-difference of the fragment and chromatogram features, (e.g. the day-difference feature of fragment A between day -2 and day -3 denoted as diff23-fragment A). In addition, two different (dis)similarity measurements were used to investigate the changes in terms of VOC patterns between consecutive days, including cosine similarity (cos-sim) and dynamic time wrapping (DTW) distance.

Cosine similarity is a method used in high-dimensional positive spaces to describe the similarity between two vectors by calculating the cosine of the angle between them. This method requires strict alignment, but not sensitive to amplitude normalization. It is bounded into the range of [0, 1], where the greater the value, the larger the similarity. By treating the chromatograms as high-dimensional vectors, the cosine similarity between two consecutive days of samples can be obtained to describe the change in VOC patterns of an infant along days.

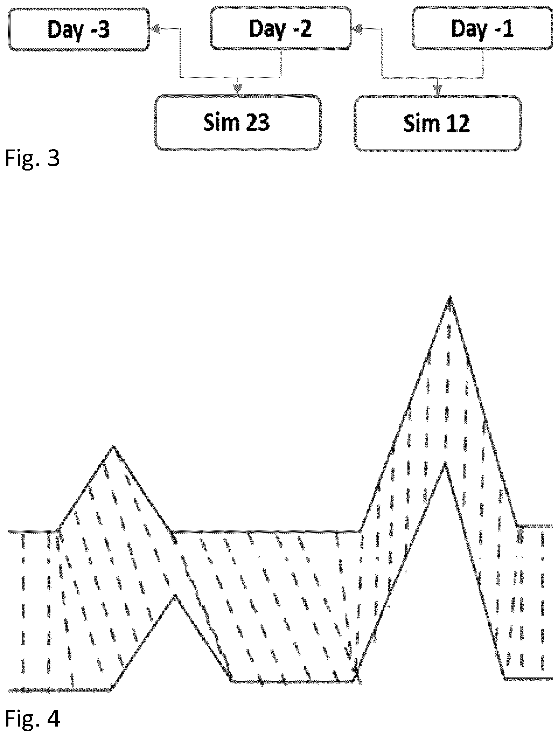

Besides, DTW is another algorithm used for measuring the similarity between two time-sequences. An example of a DTW distance calculation between two sequences is shown in Figure 3, where DTW is finding an optimal "wrapped" alignment between the sequences, and then Euclidean distances between all corresponding wrapped points are calculated and summed as the DTW distance. It quantifies the dissimilarity between two data sequences by obtaining the sum of the Euclidean distance. The biggest advantage of this method is that it is not sensitive to misalignment of the two sequences. Note that, the smaller the DTW distance, the greater the similarity.

### Understanding VOC pattern (GC data)

Chromatogram measured by GC-MS indicates the molecules and their relative abundance detected from the headspace of a fecal sample. Intuitively, quantitative analysis is a direct and effective way to explore specific NEC-related molecules of VOCs in feces. However, there are huge individualized differences in VOC patterns extracted from fecal samples, which are difficult to be standardized or generalized.

Previous studies demonstrated that the VOCs patterns are significantly influenced by the center of birth (environment), feeding method and the age of infants. In addition, feces are a product of the digestive system, which means that very different VOC patterns may be produced by infants with different physiques. All these factors make it difficult to find effective NEC-associated molecular predictors. Therefore, in this work, we also included the features that describe the overall information of the VOC pattern as described above.

Exemplary VOC patterns show that a control infant has a more consistent VOC pattern along days versus NEC. The VOC pattern of NEC infant has a big change between day -3 and -2, which is mainly reflected in the reduction in peak number and complexity. In addition, the intensity ratio features indicate that the VOC pattern of NEC infant is significantly changing in the 3rd segment (rt ∈ [850,1050]) from 0.55 to 0.39. It should be kept in mind that the chromatogram features consider the overall information of VOC patterns might help in the classification between NEC and control preterm infants.

### Feature Selection

Feature selection aims at training an optimal predictive model with a reduced set of features. In this study, one fecal sample typically generates hundreds of different VOCs resulting in thousands of ion fragments. As the working principle of GC-MS analysis described previously, each molecule is broken into several fragments with different m/z values. The abundance of these fragments belonging to the same molecule will be proportional to each other, where many features would be highly correlated, with redundant information. Therefore, we used a correlation-based feature selection method to remove the redundant collinear fragment features and to keep a certain number of fragments that are most correlated with the target labels (NEC/non-NEC) by examining the Pearson's correlation coefficients between two variables. In addition, a wrapper feature selection method was performed to further select a subset of features leading to the best classifier performance. A sequential forward selection (SFS) method was adopted, and it was implemented using the package of mlxtend described in http://rasbt.github.io/mlxtend. SFS is a greedy search algorithm and attempts to find the optimal feature subset by iteratively selecting features based on classification performance (on training data). It starts from an empty feature subset and adds one feature that produces the highest classification accuracy at the time in each iteration. The greedy search stops until the iteration with no improvement in classification accuracy.

### Method: classification

### Classification experiment design

Patient information features (FP&S), fragment features (FFrag) and chromatogram features (FChro) are available for NEC and control classification. The fragment and chromatogram features are both composed of two parts, including single-day feature (Fs-frag, Fs-chro) and features from the differences between two consecutive days (Fd-frag, Fd-chro).

To evaluate the classification performance of each feature set, and to understand whether the chromatogram features and day-difference features can improve the classification performance, we listed different feature set combinations as presented in Table 2.

**Table 2 Summary of feature sets**

| Feature set | Features (#) | Modality |
|---|---|---|
| F_{s-frag} | frag (1353×3) | MS |
| F_{d-frag} | diff-frag (1353×2) | MS |
| F_{s-chro} | chrom (8×3) | GC |
| F_{d-chro} | diff-chrom (10×2) | GC |
| F_{Frag} | frag, diff-frag (1353×5) | MS |
| F_{Chro} | chrom, diff-chrom (8×3+10×2) | GC |
| F_{FC} | frag, diff-frag, chrom, diff-chrom (1353× 3+1353× 2+8×3+10×2) | MS, GC |

| | | |
|---|---|---|
| *Note: Patient features are included in all feature sets. MS: mass spectrum data GC: gas chromatogram data. Single-day features were from three days (*×*3) and day difference features were the difference between t-3 and t-2 and between t-2 and t-1 (*×*2)*. | | |

### Classifiers

In this study, logistic regression (LR) classifier was employed which is one of the most extensively used classification models in metabolomics data analysis. Besides, LR is efficient and easy to interpret in particular when the dataset is small. In addition, we also compared the NEC prediction performance between LR and some other classifiers such as k-nearest neighbors (KNN) and support vector machine (SVM) using the best-performed feature set. All classification algorithms were implemented using the scikit-learn package in Python programming software version 3.7. The details of the classifier can be found in [scikit-learn developers, "scikit-learn Machine Learning in Python," 19 7 2019. [Online]. Available: https://scikit-learn.org/stable/.].

### Cross-validation and evaluation criteria

Due to the relatively small size of our dataset, cross-validation method was adopted to evaluate the performance. Here, 5-fold cross-validation was applied. On each iteration of the cross-validation, four folds were used to train the classifier and the left fold was used to test the classifier. The classifier was evaluated on each test set (fold), obtaining its performance for each iteration of the cross-validation. To check the stability of the model, we ran the classifier multiple runs with different training data set arrangement, the results were pooled to have an indication of the overall performance of the classification. After that, we selected and reported a single run with classification performance similar to the pooled performance.

To evaluate the classifiers and the combinations of different type of features, several different criteria were used, including the overall accuracy, the area under the receiver-operating-characteristic curve (AUC) and the confusion matrix.

### Results

### Statistical results

In total 47 preterm infants were included in this analysis. A detailed overview of the demographics and clinical characteristics of both classes are shown in Table 3.

In order to have a preliminary understanding of the chromatogram features, statistical analysis was performed with the Mann-Whitney U test. We compared the chromatogram features between NEC and control groups in different sample days.

We observed in chromatogram feature that there were significant differences (p<0.05) between NEC and control in features of sample entropy, differential entropy and intensity ratio features only at day -2. Two days before NEC onset, the VOC pattern of NEC infant has a relatively lower complexity (entropy) and a lower intensity ratio at segment 3 compared with controls. Besides, a significant difference exists in the DTW feature (dis-similarity between day -3 and -2) between NEC and control infants, where the dis-similarity is larger for NEC infants than controls. Similar to the results observed on the day difference data which implicated the most predictive features presented on the day -2.

**Table 3 Demographic and clinical characteristics of participants**

| Number(n) | | NEC (24) | Control (23) |
|---|---|---|---|
| Gender | Male (n [%]) | 12[50.0] | 11[47.8] |
| | Female (n [%]) | 12[50.0] | 12[52.2] |
| Birth weight (mean [SD]), g | | 918[223] | 920[198] |
| Gestational age (mean [SD]) weeks+ davs[days] | | 26+5[10] | 26+5[9] |
| Number of singletons births (n [%])] | | 16[66.7] | 16[69.6] |
| NEC stage: | | | |
| IIA (n [%]) | | 7[29.0] | |
| IIB (n [%]) | | 7[29.0] | NA |
| IIIA (n [%]) | | 5[21.0] | |
| IIIB (n [%]) | | 5[21.0] | |
| Mortality (n [%]) Age of death (median [days]) | | 7[29.0] | 0[0] |
| | | 14[12] | NA |

### Classification results

The classification results obtained using LR classifier with different feature sets (see Table 2) are summarized in Table 4, where multiple runs and single run results are presented. Note that, for each feature set, the classifier parameters were optimized by the accuracy of the training data. For the LR classifier, we used parameters including C = 0.1, penalty = 12, max iteration = 100, and tolerance = 0.0001 (C is the inverse of regularization strength).

As can be seen in Table 4, single-day fragment features (Fs-frag) outperformed the single-day chromatogram feature set and the two day-difference feature sets. Combining the Fs-frag with the day-difference fragment feature (Fd-frag), the classification performance did not improve, indicating that the addition of day-difference fragment features does not add extra discriminative power. The best classification performance (averaged accuracy =77.7% and averaged AUC = 0.82) was achieved by combining all features. Figure 2 compares the ROC curves for different feature sets.

The LR classifier performance versus the number of features was obtained by cross-validation using the feature set FFC, it was observed that 14 features achieved optimal performance.

The classification performance of the 5-fold cross-validation by feature set FFC resulted in a confusion matrix.

**Table 4 Summary of the classification performance**

| **Feature set** | **Accuracy (%)** | | **AUC** | |
|---|---|---|---|---|
| | **Single run** | **Multiple runs** | **Single run** | **Multiple runs** |
| F_{s-frag} | 70.1 | 70.5 ± 7.6 | 0.79 | 0.77 ± |
| F_{d-frag} | 68.5 | 68.9 ± 2.7 | 0.72 | 0.11 |
| F_{s-chro} | 60.6 | 62.4 ± 5.1 | 0.57 | 0.73 + |
| F_{d-chro} | 67.2 | 67.2 ± 3.2 | 0.68 | 0.04 0.61 + 0.07 0.69 ± 0.02 |
| F_{Frag} | 70.3 | 70.7 ± 8.1 | 0.79 | 0.78 ± 0 08 |
| F_{Chro} | 69.9 | 70.3 ± 2.4 | 0.75 | 0.74 ± 0 03 |
| F_{FC} | **78.7** | **77.7 ± 5.3** | **0.84** | **0.82 ± 0.05** |

| | | | | |
|---|---|---|---|---|
| *Note: For each feature set, we ran multiple times with different training set arrangement, obtaining the pooled results (averaged performance* ± *standard deviation). Besides, we selected one of these runs (single run) with similar classification performance as the pooled results.* | | | | |

**Table 5 List of most frequently selected features during 5-fold cross-validation**

| **#** | **Selected features** | **Selected times (5-fold)** | **Modality** | **MS Result** |
|---|---|---|---|---|
| 1 | 'day-1-35@905' | 4 | MS | 3-(methylthio)-propanal |
| 2 | 'day-2-77@953' | 4 | MS | Camphene |
| 3 | 'day-2-117@1006' | 4 | MS | |
| 4 | 'day-2-65@953' | 4 | MS | Camphene |
| 5 | 'day-2-119@978' | 3 | MS | Benzeneacetaldehyde |
| 6 | 'day-2-119@996' | 3 | MS | 3-methylbenzaldehyde |
| 7 | 'day-2-66@998' | 3 | MS | tert. butoxy-benzene |
| 8 | 'day-3-67@823' | 3 | MS | 2-ethyl-1,3-butadiene or cyclohexene |
| 9 | 'day-1-126@956' | 2 | MS | 2-pentylfuran |
| 10 | 'day-2-gc_seg_ratio3' | 3 | GC | |
| 11 | 'diff23-SampEn' | 3 | GC | |
| 12 | 'day-1-DiffEn | 2 | GC | |
| 13 | 'diff23-Cos_sim' | 2 | GC | |
| 14 | 'day-2-SampEn' | 2 | GC | |

| | | | | |
|---|---|---|---|---|
| *Note: Prefix added before the feature name indicates which sample day the feature comes from (i.e. day-2: two days before NEC onset, diff23: the difference between day -2 and -3). MSfeatures were listed by the notation of [m*/*z]@[rt].* | | | | |

To understand which features played the most important role in the classification of NEC and control infants, we list the features that were selected at least twice during the 5-fold cross-validation in Table 5. It shows that there is no single feature selected by every fold, which means that the training data between folds has a large variability.
As can be seen in Table 5, the most frequently selected features by LR classifier with feature set FFC were MS features (fragments), following by GC features extracted from VOC patterns. From the list, we noticed that most of these features were from the day -2 (8 out of 14). In addition, we observed that, for the most selected MS features, 8 out of 9 were from the third segment as defined previously. For these MS features from the third segment, the box plots show that NEC preterm infants have relatively lower intensity in these features at day -2 compared to controls. For GC features, the intensity ratio feature of 3rd segment (day-2) and day-difference feature of SampEn (between day-3 and -2) were selected mostly, following by DiffEn (day-1), Cos-sim (between day-3 and -2), and SampEn (day-2) features.

We also compared the performance of different classifiers with the feature set of FFC. The results of KNN (n_neighbor=5) classifier performed worse than LR with an averaged accuracy of 73.6% and AUC of 0.76. But the SVM achieved a comparable result to LR with a non-linear kernel (accuracy: 78.1% and AUC:0.81).

### Discussion

In this study, we studied the feasibility of fecal VOCs as early predictors for NEC by means of GC-MS data analysis. We observed that the GC features extracted from the chromatograms showed significant differences between NEC and control infants two days before onset, but these differences became smaller at the day after. In the MS features, we found similar observations: most of the MS features showed significant differences at the day -2.

In this multicenter study, the normalization of VOC patterns for preterm infants is typically challenging when searching for VOCs predictors. As mentioned, many external factors, such as birth center, gestational age, and feeding methods, may impact the VOC pattern extracted from the fecal sample of the infant. Although the MS features showed the power of discriminating the NEC from controls, further study is needed to verify whether these selected fragments are NEC-associated from a medical perspective. In addition, to study the discriminative power of the single-day fragment features on different days, we obtained the classification performances by different single-day fragment feature combinations as shown in Figure 12. It shows that the fragment feature of the day -2 outperforms other single-day fragments. By adding day -1 fragment features, the performance was slightly improved from ~65% to ~68%. By adding day -3 fragment features, the performance was enhanced to ~70%. But the fragments from the day -1 does not add more discriminative power to the fragment feature set with day-2 plus day-3.

A strength of this study is that next to MS features we also extracted multiple GC features, and the extraction of these GC features does not require pattern normalization for different infants. Based on the statistical analysis results of GC features, we found the VOC patterns were consistent with our previous hypothesis. Fecal VOC patterns obtained from control infants performed more stable over time then NEC infants by similarity measurements. The number of peaks detected in GC data and the VOC patterns' complexity of NEC infants was relatively lower than the controls at two days before NEC onset. This can be explained by the fact that the composition of the microbiota in the gut of control infant becomes more abundant as it ages, especially in the first weeks of birth.

We normalized each VOC pattern by its maximum peak value. In this way, we worked with the relative intensity of each molecule/ fragment in this study. Because samples were stored over a long period of time, part of the volatile substance may have been lost during sample collection and storage. A real-time measurement setup may be helpful to the acquisition of a complete VOC pattern in the future.

In addition, different NEC stages are not considered separately due to the relatively small data size. Since different NEC stages are related, but not a straightforward relationship with the severity, which increases the difficulty of finding universal predictors for NEC. We observed that, in general, NEC infants have relatively lower intensity ratio at the 3rd segment. But for the different stages, they behaved very differently, which might be caused by the size of the data. In our data set, we also noticed that for different features, the mutual relationships between different stages were not always the same. A further study working with only the most severe stage, IIIB, can be helpful to discover NEC-related fecal VOC predictors.

In the perspective of features, three consecutive days fecal samples were collected in this study, so we added prefixes to different days of features, such as day -1, -2 and -3. Since the onset speed for different stages and for different infants can be very different, and the NEC symptoms onset can be diagnosed in the morning or evening. The labeling of -3,-2,-1 might cause the problem of data misalignment.

For NEC classification, we used a wrapper method feature selection of SFS considers the feature selection as a searching problem, which adds a feature for each iteration to achieve a better score. But the results are order sensitive, which means the best feature combination might be missed. Besides, the training set arrangement influences the results, which means very different results will be generated by different separation strategies. We randomly selected ten arrangements and averaged the results to reduce the bias of the classification performance in this study. Further study is needed to achieve a stable prediction model by a larger data set.

### Conclusions

In this study, MS features and GC features were extracted from GC-MS data obtained from fecal samples from neonates and used to predict NEC for preterm infants a few days before symptoms onset. Given the data set, we found that most of the features with significant differences between two classes (NEC and control) come from the day -2, which means two days before clinical onset. Looking in detail to the VOC patterns, the molecules abundance ratio at the 3rd part of the chromatogram (heavier molecules) seems to be different between NEC and control, where NEC is likely to have a lower intensity ratio in the 3rd segment than control. Furthermore, the complexity of the chromatogram between NEC and control infants seems to be different by entropy measurements, where NEC infants may have lower VOC pattern complexity compared with controls. By investigating the similarity features of VOC patterns between two consecutive days, the VOC patterns obtained from control infants perform more stable over time than NEC infants. By combining the MS features and GC features, we obtained an averaged classification performance of 77.7% accuracy and 0.82 of AUC. In conclusion, fecal VOC patterns of preterm infants measured by GC-MS have the potential to predict NEC a few days before onset.

Various embodiments of the invention are summarized in the following clauses.
Clause 1. Method for characterizing a volatile organic compound (VOC) profile in a sample based on assigning the VOC profile to a group selected from two or more different groups having different features, wherein the method comprises:
   - performing mass spectrometry (MS) analysis on the VOCs present in the sample to extract MS data; and
   - performing gas chromatography (GC) analysis on the VOCs present in the sample to extract GC data,
   using the GC and MS data to construct GC and MS features using characteristics of the chromatogram;
   building a model from the extracted MS and GC features by putting the features in a classifier using a classification method, combining the features and the classifier to form a model, and training the model with a labelled training dataset;
   wherein the MS features are MS peaks which differentiate with the different groups, and
   wherein the GC features are features describing the characteristics of the GC pattern that reflect physiology and differentiate with the different groups,
   wherein characterizing the VOC profile is based on the assigned group.
Clause 2. Method according to Clause 1, wherein the method is for diagnosing a disease, staging a disease, stratifying a disease or monitoring a treatment response in a subject, wherein the diagnosing the disease, staging the disease, stratifying the disease or monitoring the treatment response in the subject is based on the assigned group by relating the assigned group to a diagnosis, disease stage, stratification or treatment response.
Clause 3. Method according to Clause 2, wherein the sample is fecal matter, urine or breath obtained from the subject, preferably wherein the method further comprises providing fecal matter, urine or breath of the subject, more preferably wherein the method further comprises pre-processing the fecal matter for VOC analysis, preferably wherein the pre-processing comprises static headspace sampling.
Clause 4. Computer implemented method for characterizing a volatile organic compound (VOC) profile in a sample based on assigning the VOC profile to a group selected from two or more different groups having different features, wherein the method comprises:
   - receiving mass spectrometry (MS) data obtained from the VOCs present in the sample; and
   - receiving gas chromatography (GC) data obtained from the VOCs present in the sample, using the GC data to construct GC features using characteristics of the chromatogram;
   building a model from the extracted MS and GC features by putting the features in a classifier using a classification method, combining the features and the classifier to form a model, and training the model with a labelled training dataset,
   wherein the MS features are MS peaks which differentiate with the different groups, and
   wherein the GC features are features describing the characteristics of the GC pattern that reflect physiology and differentiate with the different groups,
   wherein characterizing the VOC profile is based on the assigned group.
Clause 5. Method according to Clause 4, wherein the method is for diagnosing a disease, staging a disease, stratifying a disease or monitoring a treatment response in a subject, wherein the diagnosing the disease, staging the disease, stratifying the disease or monitoring the treatment response in the subject is based on the assigned group by relating the assigned group to a diagnosis, disease stage, stratification or treatment response.
Clause 6. Method according to any one of the preceding Clauses, wherein the classification method is selected from a linear regression model, a logistic regression model, support vector machine, k-nearest neighbors, perceptron, linear discriminant analysis, naive Bayes, decision tree, random forest, AdaBoost or neural networks.
Clause 7. Method according to any one of the preceding Clauses, wherein the GC features comprise at least one feature selected from peak numbers, complexity, intensity ratio or similarity of the GC profile.
Clause 8. Method according to Clause 2 or Clause 6, wherein the diagnosis, staging, stratification or monitoring is based on comparing the VOC profile in the fecal matter obtained from the subject at two different time points, preferably from two different days, more preferably from two consecutive days.
Clause 9. Method according to any one of Clauses 2, 6 or 8, wherein the disease to be diagnosed, staged, stratified or monitored is a disease that affects a metabolic pathway such that the differences can be observed in the VOC profile of the subject affected by the disease, preferably respiratory infection or lung cancer, or a disease that affects the microbiome, preferably necrotizing enterocolitis, sepsis, bowel disease, colon cancer or malnutrition.
Clause 10. Method according to any one of the previous Clauses , wherein the subject is a newborn suffering from or suspected to suffer from necrotizing enterocolitis (NEC), and the method is for diagnosing the subject with NEC, for staging the progression of NEC or for monitoring the treatment response to treatment of NEC in the subject.
Clause 11. Method according to any one of the previous Clauses, wherein the method further comprises preprocessing of the GC data, preferably wherein the pre-processing comprises peak detection and alignment.
Clause 12. Method according to any one of the previous Clauses, wherein the GC feature peak numbers comprises comparing the number of peaks in the GC data obtained from the subject with the number of peaks observed in a reference sample obtained from a reference subject, or by comparing the number of peaks in the GC data obtained from the subject with the number of peaks observed in a sample obtained from the same subject at a different time point, wherein the peak numbers are counted after baseline noise removal.
Clause 13. Method according to any one of the previous Clauses, wherein the GC feature complexity comprises comparing the entropy of the GC data obtained from the subject with the entropy of the GC data observed in a reference sample obtained from a reference subject, or by comparing the entropy in the GC data obtained from the subject with the entropy observed in a sample obtained from the same subject at a different time point,
   wherein the entropy is expressed as one selected from:
   - the minimum number of bits needed to encode the data sequence;
   - quantifying the complexity by measuring the probability that a new pattern is generated in the sequence;
   - measuring the complexity of a data sequence in the spectrum domain.
Clause 14. Method according to any one of the previous Clauses, wherein the GC feature intensity ratio comprises comparing the intensity ratio in the GC data obtained from the subject with the intensity observed in a reference sample obtained from a reference subject, or by comparing the intensity ratio in the GC data obtained from the subject with the intensity ratio observed in a sample obtained from the same subject at a different time point, wherein the chromatogram is divided in segments with different retention time ranges and computing for each segment the percentage of molecule number over the total molecule number of the entire retention time.
Clause 15. Method according to any one of the previous Clauses, wherein the GC feature similarity comprises comparing the similarity in the GC data obtained from the subject with the intensity observed in a sample obtained from the same subject at a different time point, wherein similarity is determined using cosine similarity or dynamic time warping.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention may be implemented by means of hardware comprising several distinct elements, and/or by means of a suitably programmed processor. In the device claim enumerating several means, several of these means may be embodied by one and the same item of hardware. Measures recited in mutually different dependent claims may advantageously be used in combination.

## Claims

1. Computer implemented method for characterizing a volatile organic compound profile in a sample, wherein the method comprises:
receiving gas chromatography data obtained from the volatile organic compounds present in the sample,
comparing the gas chromatography data with reference gas chromatography data, the reference gas chromatography data being gas chromatography data from the same subject from a different time point, preferably from a different day, more preferably from an adjacent day, and/or gas chromatography data from a reference subject, to characterize the volatile organic compound profile.

2. Method as claimed in claim 1, further comprising using the gas chromatography data to construct gas chromatography features using characteristics of the chromatogram, wherein the gas chromatography features comprise at least one feature selected from peak numbers, complexity, intensity ratio or similarity of the gas chromatography data, and wherein the comparing step includes comparing the gas chromatography features.

3. Method as claimed in any one of the previous claims, wherein the method further comprises preprocessing the gas chromatography data, preferably wherein the pre-processing comprises peak detection and alignment.

4. Method as claimed in any one of the previous claims, wherein the comparing step comprises comparing a number of peaks in the gas chromatography data with a number of peaks observed in the reference gas chromatography data.

5. Method as claimed in any one of the previous claims, wherein the comparing step comprises comparing entropy of the gas chromatography data with entropy of the reference gas chromatography data, wherein the entropy is expressed as one selected from:
- the minimum number of bits needed to encode the data sequence;
- quantifying the complexity by measuring the probability that a new pattern is generated in the sequence;
- measuring the complexity of a data sequence in the spectrum domain.

6. Method as claimed in any one of the previous claims, wherein the comparing step comprises comparing an intensity ratio in the gas chromatography data with an intensity ratio in the reference gas chromatography data, wherein the chromatogram is divided in segments with different retention time ranges and for each segment the percentage of molecule number is computed over the total molecule number of the entire retention time.

7. Method as claimed in any one of the previous claims, wherein the comparing step comprises comparing the similarity between the gas chromatography data and the reference gas chromatography data, wherein similarity is determined using cosine similarity or dynamic time warping.

8. Method as claimed in any of the preceding claims, wherein the comparing step comprises comparing the gas chromatography data from a subject on a first day with gas chromatography data from the same subject relating to an adjacent day.

9. Method as claimed in any of the preceding claims, wherein the comparing step is carried out by using a model developed by machine learning based on a set of gas chromatography data from multiple subjects with respective clinical data, whereby the gas chromatography data is compared with reference gas chromatography data from the multiple subjects.

10. Method as claimed in any of the preceding claims, wherein the comparing step comprises comparing gas chromatography data relating to 3-(methylthio)-propanal.

11. Method as claimed in claim 10, wherein the comparing step further comprises comparing gas chromatography data relating to camphene.

12. Method as claimed in claim 11, wherein the comparing step further comprises comparing gas chromatography data relating to benzeneacetaldehyde, 3-methylbenzaldehyde, tert.butoxy-benzene, 2-ethyl-1,3-butadiene, cyclohexene, and/or 2-pentylfuran.

13. A computer program comprising code that when implemented on a processor enables the processor to carry out a method as claimed in any of the previous claims.

14. A system comprising a processor configured to carry out a method as claimed in any of claims 1-13.
